# FASCICULE DE BREVET EUROPEEN

(11) **EP 1 434 340 B1**
(45) Date de publication et mention de la délivrance du brevet: **01.08.2007**
(21) Numéro de dépôt: 03300277.5
(22) Date de dépôt: 22.12.2003
(51) Int. Cl.: H02M 5/42, H02M 5/22, H02M 5/257, H02M 7/04, H02M 1/08

(54) **Alimentation basse tension isolée**
Isolierte Niederspannungsversorgung
Isolated low voltage power supply

(30) Priorité: 27.12.2002 FR 0216806
(43) Date de publication de la demande: 30.06.2004
(73) Titulaire: STMicroelectronics S.A., 92120 Montrouge (FR)
(72) Inventeur: Peron, Benoît, 37000 Tours (FR); Gautier, Frédéric, 37000 Tours (FR)
(74) Mandataire: de Beaumont, Michel

(56) Documents cités:
- FR-A- 2 783 981

## Description

La présente invention concerne la fourniture d'une tension d'alimentation continue relativement basse à un circuit de commande d'un interrupteur ou d'une charge alimentée par une tension relativement haute. L'invention concerne plus particulièrement l'alimentation d'un circuit de commande d'une charge haute tension en amont d'un pont redresseur, par exemple, fournissant une tension redressée à un convertisseur de puissance de type alimentation à découpage.

Le document FR 2783981 décrit un circuit ayant les caractéristiques définies dans le préambule de la revendication 1.

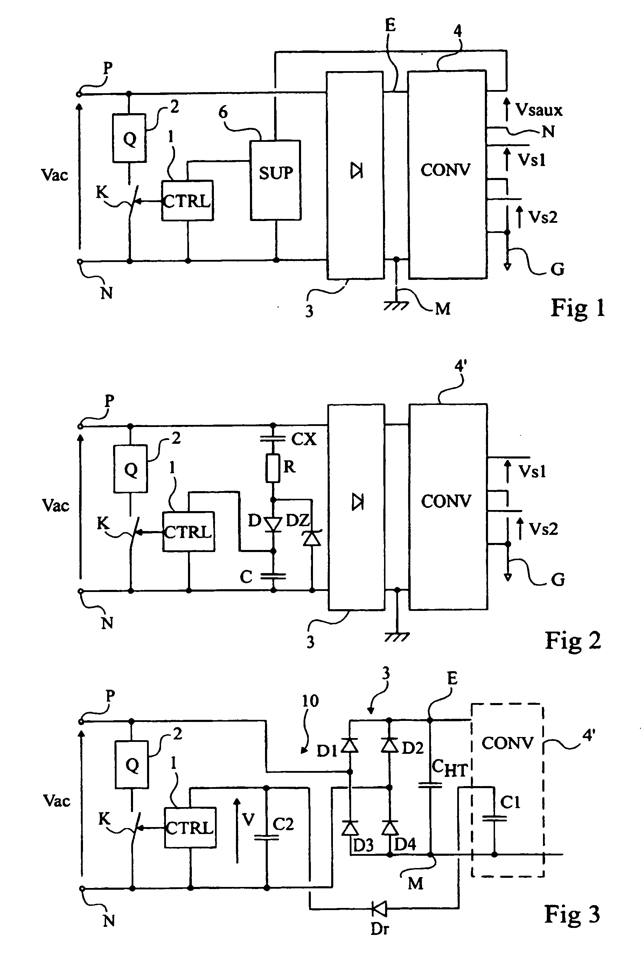

La figure 1 représente, de façon très schématique et sous forme de blocs, un premier exemple classique de fourniture d'une tension d'alimentation relativement basse à un circuit 1 de commande, dans cet exemple par l'intermédiaire d'un interrupteur K, d'une charge 2 (Q) alimentée par une tension alternative relativement élevée Vac appliquée entre des bornes P et N. Les bornes P et N correspondent à des bornes d'entrée alternative d'un pont 3 de redressement double alternance dont des bornes E et M de sortie redressée alimentent un convertisseur de puissance 4 (CONV), par exemple de type alimentation à découpage. Dans l'exemple de la figure 1, le convertisseur 4 fournit plusieurs tensions continues de niveaux différents (par exemple, deux tensions Vs1 et Vs2) référencées à une masse G pouvant être différente de la masse M de sortie du pont 3.

La tension d'alimentation du circuit de commande 1 est, par exemple, fournie par un bloc 6 d'alimentation lui-même alimenté à partir d'une tension Vsaux fournie par le convertisseur 4 au moyen d'un enroulement auxiliaire.

Un problème est que l'enroulement de fourniture de la tension Vsaux doit être référencée au neutre N de l'alimentation alternative qui doit donc être isolé de la masse G des autres tensions de sortie du convertisseur 4. Ce besoin d'isolement au sein même du convertisseur 4, lié à la présence d'un enroulement auxiliaire référencé sur le réseau alternatif, accroît la complexité et l'encombrement du convertisseur.

De plus, l'enroulement auxiliaire altère le couplage et augmente les inductances de fuite du convertisseur.

La figure 2 représente un deuxième exemple classique de fourniture d'une tension d'alimentation à un circuit 1 de commande d'une charge 2 alimentée par une tension alternative Vac. On y retrouve le pont de redressement double alternance 3 et un convertisseur de type alimentation à découpage 4'. La différence essentielle par rapport à la figure 1 est que l'exemple de la figure 2 utilise une capacité haute tension CX en amont du pont de redressement 3 plutôt qu'un enroulement auxiliaire du convertisseur 4'. La capacité CX est connectée par une de ses électrodes à la phase P de l'alimentation alternative et par l'autre de ces électrodes à une résistance R en série avec une diode D et un condensateur C de fourniture de la tension d'alimentation du circuit 1. Une diode Zener DZ est connectée entre le point milieu de l'association en série de la résistance R avec la diode D et le neutre N de l'alimentation alternative. La diode Zener DZ fixe la valeur de la tension aux bornes du condensateur C, donc de la basse tension d'alimentation du circuit 1. La diode D sert d'élément de redressement, le condensateur C étant rechargé une alternance sur deux de la tension alternative Vac, puisque la diode DZ conduit en direct via le condensateur CX.

L'exemple de la figure 2 qui consiste en fait à réaliser une impédance élevée non dissipative en série avec le condensateur C de fourniture de l'alimentation du circuit de commande 1 pose les mêmes problèmes de taille et de coût que l'exemple de la figure 1.

La présente invention vise à proposer une nouvelle solution pour alimenter, par une tension relativement basse, un circuit de commande d'une charge alimentée par une tension relativement haute, généralement alternative, qui pallie les inconvénients des solutions connues.

Dans une application à un circuit comprenant un convertisseur de puissance alimenté par un pont de redressement, l'invention vise plus particulièrement à éviter le recours à un enroulement auxiliaire spécifique du convertisseur et à résoudre ainsi les problèmes d'isolement, tout en prélevant l'énergie d'alimentation du circuit de commande 1, placé en amont du pont de redressement, en aval de ce dernier.

L'invention vise également à éviter le recours à une impédance élevée en amont du pont de redressement.

Pour atteindre ces objets et d'autres, la présente invention prévoit un circuit isolé d'alimentation basse tension d'un circuit de commande d'une charge haute tension, dans ou en amont d'un pont redresseur, comportant :
un premier condensateur basse tension fournissant une basse tension, une première électrode dudit condensateur étant connectée à une des bornes de sortie redressée du pont ; et
au moins un deuxième condensateur fournissant ladite basse tension audit circuit de commande, une première électrode du deuxième condensateur étant reliée à une des bornes d'entrée alternative du pont, les deuxièmes électrodes respectives des condensateurs étant reliées par une diode haute tension dont la cathode est reliée au deuxième condensateur.

Selon un mode de réalisation de la présente invention, la charge du deuxième condensateur intervient pendant une période de conduction du pont où celui de ses éléments de redressement qui relie les premières électrodes respectives des condensateurs conduit, cet élément reliant les électrodes de potentiel le plus négatif.

Selon un mode de réalisation de la présente invention, le premier condensateur est un condensateur d'alimentation basse tension d'un circuit en aval du pont.

Selon un mode de réalisation de la présente invention, le circuit comporte une deuxième diode haute tension dont l'anode est reliée, par l'intermédiaire d'un interrupteur de commande logique, à la deuxième électrode du premier condensateur, et dont la cathode est reliée à une borne d'entrée logique du circuit de commande en amont du pont.

Selon un mode de réalisation de la présente invention, le pont de redressement est un pont double alternance ou triphasé.

Selon un mode de réalisation de la présente invention, le pont est un pont mixte ou commandé.

Selon un mode de réalisation de la présente invention, ladite charge est constituée par au moins un des éléments de redressement du pont.

Selon un mode de réalisation de la présente invention, le premier condensateur est chargé par un enroulement auxiliaire d'un transformateur d'une alimentation à découpage en aval du pont.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
la figure 1 décrite précédemment représente, de façon très schématique et sous forme de blocs, un premier exemple classique de circuit isolé d'alimentation basse tension ;
la figure 2 décrite précédemment représente, de façon très schématique et sous forme de blocs, un deuxième exemple classique de circuit isolé d'alimentation basse tension ;
la figure 3 représente, de façon très schématique et sous forme de blocs, un mode de réalisation d'un circuit isolé d'alimentation basse tension selon la présente invention ;
la figure 4 représente une variante de réalisation d'un circuit isolé d'alimentation basse tension selon l'invention, adapté à la fourniture d'une consigne logique au circuit alimenté ; et
la figure 5 représente un autre mode de réalisation d'un circuit isolé d'alimentation, dédié à un pont commandable.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, l'invention sera décrite ci-après en relation avec un exemple d'application à un pont d'alimentation d'un convertisseur de type alimentation à découpage. On notera toutefois que celle-ci s'applique plus généralement quels que soient les éléments connectés en aval du pont de redressement double alternance ou triphasé, pourvu qu'on puisse y disposer une capacité basse tension. De plus, la constitution du convertisseur de puissance de type alimentation à découpage n'a pas été détaillée et ne fait pas l'objet de la présente invention.

Une caractéristique de la présente invention est d'utiliser un condensateur stockant une tension relativement basse en aval du pont de redressement double alternance ou triphasé pour alimenter un condensateur, disposé en amont du pont de redressement et destiné à fournir l'alimentation du circuit de commande isolé basse tension. Selon l'invention, ces deux condensateurs sont reliés par une diode haute tension fournissant l'isolement.

Une autre caractéristique de la présente invention est d'utiliser l'une des diodes (ou plus généralement l'un des éléments de redressement) du pont double alternance ou triphasé pour refermer le circuit de charge du condensateur placé en amont du pont. A cet égard, l'invention utilise cet élément de redressement intégré au pont, en conduction directe, uniquement lorsqu'il conduit pour assurer le transfert d'énergie à destination du convertisseur de puissance en aval du pont.

La figure 3 représente, de façon schématique et sous forme de blocs, un mode de réalisation d'un circuit isolé d'alimentation basse tension 10 selon la présente invention. Ce circuit 10 est destiné à fournir une tension V d'alimentation d'un circuit 1 de commande (CTRL) d'une charge 2 (Q) haute tension. Dans l'exemple de la figure 3, le circuit 1 commande un interrupteur K placé en série avec la charge 2 entre deux bornes P et N d'application d'une tension alternative Vac. Un pont de redressement double alternance 3 a ses entrées alternatives connectées aux bornes P et N et fournit une haute tension redressée à un convertisseur 4' CONV de type alimentation à découpage d'une façon similaire à l'exemple classique de la figure 2. En figure 3, un condensateur CHT haute tension a été représenté aux bornes E et M de sortie redressée du pont 3. Ce condensateur CHT est destiné à stocker la tension d'alimentation du convertisseur. Le pont 3 est dans cet exemple constitué de quatre diodes D1 à D4, les diodes D1 et D3 étant en série entre les bornes E et M de mêmes que les diodes D2 et D4. Les anodes des diodes D1 et D2 sont connectées respectivement aux bornes P et N.

Selon la présente invention, le circuit 10 comporte essentiellement :
un condensateur C1 en aval du pont 3 et dont une des électrodes est connectée à une des bornes de sortie redressée du pont (ici la borne M), donc aux anodes communes des éléments redresseurs ;
au moins un condensateur C2 de fourniture de la tension V, placé en amont du pont 3 et dont une des électrodes est connectée à l'une des bornes d'entrée alternative (ici la borne N) du pont 3 ; et
une diode Dr (ou plus généralement un élément de redressement) reliant les deuxièmes électrodes respectives des condensateurs C1 et C2, l'anode de la diode Dr étant connectée à l'électrode du condensateur en aval du pont 3.

Selon l'invention, les condensateurs C1 et C2 sont tous deux des condensateurs basse tension. La diode Dr joue le rôle de barrière d'isolement sur les deuxièmes électrodes (positives) des condensateurs alors qu'une diode (ici D4) du pont 3 joue le rôle de barrière d'isolement entre les premières électrodes des condensateurs (les masses).

L'invention tire profit de la présence dans le pont 3 de la diode D4. Toutefois, celle-ci n'est pas utilisée comme dans son fonctionnement normal au sein du pont. En effet, pour la charge du condensateur haute tension CHT entre les bornes E et M, l'on utilise pour les alternances arbitrairement positives les diodes D1 et D4 en direct et pour les alternances négatives les diodes D2 et D3 également alors que celles-ci sont polarisées en direct.

Selon l'invention, le condensateur C2 de fourniture de la tension V relativement basse se charge uniquement par transfert direct de l'énergie du condensateur C1 en équilibrant les charges respectives des condensateurs C1 et C2. La seule condition sur le pont 3 est que cet équilibre de charge s'effectue pendant les périodes où la diode D4 conduit, c'est-à-dire dans cet exemple pendant les périodes de charge du condensateur CHT sur les alternances positives. Toutefois, selon l'invention, cette diode D4 n'est alors pas utilisée pour transférer l'énergie dans son sens direct.

En effet, quand la diode D4 conduit, la tension à ses bornes diminue et tend vers sa tension de jonction (par exemple de l'ordre de 0,6 volt). Alors, si la tension aux bornes du condensateur C2 est inférieure à la tension aux bornes du condensateur C1, la diode Dr devient conductrice et les tensions aux bornes des condensateurs C2 et C1 s'équilibrent. En effet, les chutes de tension dans les diodes D4 et Dr se compensent de sorte que la tension V aux bornes du condensateur C2 correspond à la tension aux bornes du condensateur C1. En fait, le sens des diodes Dr et D4 fait que c'est le condensateur C1 qui recharge le condensateur C2. En fait, le courant assurant la charge du condensateur C2 se soustrait du courant correspondant au transfert d'énergie vers le convertisseur 4' pour son fonctionnement.

La seule précaution à prendre pour la mise en oeuvre de l'invention est que le condensateur C1, s'il doit par ailleurs alimenter des éléments du convertisseur 4', soit dimensionné de façon suffisante pour fournir l'énergie à la fois pour ces éléments et pour le circuit de commande 1. En d'autres termes, le condensateur C1 est dimensionné en fonction de l'application pour fournir en permanence une tension suffisante.

De préférence, le condensateur C1 en aval du pont 3 correspond à un condensateur utilisé pour alimenter un circuit de commande (non représenté) du convertisseur 2 (par exemple, le circuit de commande de l'interrupteur à découpage de ce convertisseur). Dans ce cas, la présente invention tire profit de l'existence d'un condensateur basse tension en aval du pont pour utiliser l'énergie que ce dernier stocke afin de transférer cette énergie sur le condensateur C2 en amont du pont.

Un avantage de la présente invention est qu'elle ne nécessite pas d'enroulement auxiliaire supplémentaire isolé par rapport aux autres enroulements du convertisseur 4'. Le couplage du transformateur de fourniture des basses tensions par le convertisseur est donc amélioré par rapport au cas où un des enroulements doit être référencé au neutre de l'alimentation alternative. L'invention utilise un des enroulements existants (par exemple, celui fournissant la tension d'alimentation du circuit de commande du convertisseur).

Un autre avantage de l'invention est qu'elle ne requiert pas de condensateur haute tension, que ce soit en amont ou en aval du pont de redressement.

Un autre avantage de l'invention est que sa mise en oeuvre ne requiert, par rapport à un circuit classique du type de celui de la figure 2, qu'un léger surdimensionnement du condensateur C1 d'alimentation du circuit de l'interrupteur à découpage pour tenir compte de la tension d'alimentation nécessaire pour le circuit 1 en amont du pont de redressement.

Bien entendu, la diode Dr est une diode haute tension pour respecter le besoin d'isolement, la diode D4 étant quant à elle forcément une diode haute tension dans la mesure où elle est déjà intégrée dans le pont.

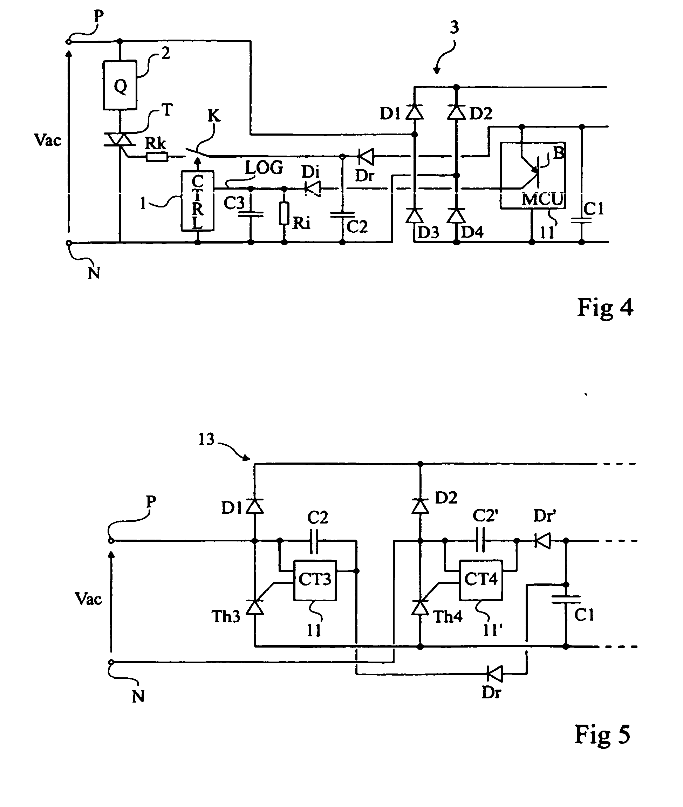

La figure 4 représente une variante de réalisation de l'invention. Cette variante consiste à adjoindre, à un circuit d'alimentation du type décrit en relation avec la figure 3, un circuit de transfert d'information logique entre l'aval du pont de redressement et le circuit 1 de commande alimenté par le condensateur C2. Dans cet exemple, on a considéré que le circuit 1 de commande était destiné à ouvrir un interrupteur K alimentant, par le condensateur C2, la gâchette d'un triac T en série avec la charge 2 entre les bornes P et N. Optionnellement, une résistance Rk (éventuellement confondu avec l'interrupteur K), est intercalée entre ce dernier et la gâchette du triac T.

Selon l'invention, le circuit de commande reçoit une consigne logique LOG provenant d'un circuit logique 11 (MCU) de l'aval du pont de redressement 3. Par exemple, le circuit 11 est un microcontrôleur dont un transistor de sortie B est monté à collecteur ouvert avec son émetteur relié à l'électrode positive du condensateur C1 et sa base commandée par le circuit 11 (d'une manière non représentée).

Selon l'invention, le collecteur du transistor B ou tout élément équivalent fournissant un niveau logique est relié, par l'intermédiaire d'une diode d'isolement Di, à l'entrée du circuit 1 recevant le signal LOG, qui est par ailleurs connectée à la masse (neutre N de l'alimentation alternative) par un condensateur C3 en parallèle avec une résistance Ri. Le rôle du condensateur C3 est de stocker temporairement l'état de commande du signal logique, la résistance Ri étant là pour faire disparaître ce signal au bout d'un certain temps (constante de temps définie par les composants C3 et Ri).

Comme pour l'alimentation du condensateur C2, la consigne logique n'est transmise de l'aval vers l'amont du pont redresseur que lorsque la diode D4 conduit et l'isolement entre les parties amont et aval du pont de redressement est garanti, pour le signal de commande, par les diodes Di et D4.

Un avantage du mode de réalisation de la figure 4 est qu'il permet de transférer une consigne de commande simplement en ajoutant une diode haute tension Di entre l'aval et l'amont d'un pont de redressement alimentant un convertisseur.

La figure 5 représente, de façon schématique et partielle, un autre mode de réalisation de l'invention selon lequel la charge à commander est précisément le pont redresseur 13. Dans cet exemple, il s'agit d'un pont mixte dans lequel, par rapport aux figures précédentes, les diodes D3 et D4 ont été remplacées par deux thyristors Th3 et Th4 à gâchette de cathode. En aval du pont 13, on retrouve les mêmes éléments que ceux décrits en relation avec les figures précédentes, à savoir un convertisseur non représenté et un condensateur C1 basse tension.

Selon ce mode de réalisation de l'invention, le condensateur C1 est utilisé pour fournir de l'énergie à des circuits 11 (CT3) et 11' (CT4) de commande des thyristors respectivement Th3 et Th4, par l'intermédiaire de deux condensateurs C2 et C2' ayant un fonctionnement identique à celui décrit dans les figures précédentes pour le condensateur C2. Chaque condensateur C2, C2' est associé à une diode Dr, Dr' reliée en aval du pont 13 sur l'électrode positive du condensateur C1. Les circuits 11 et 11' sont alimentés par les tensions respectives aux bornes des condensateurs C2 et C2'.

Un tel mode de réalisation permet de générer l'alimentation nécessaire aux commandes des thyristors du pont mixte.

On notera que ce qui a été décrit ci-dessus en relation avec les thyristors de la partie basse du pont (neutre de l'alimentation alternative) peut également être effectué si ces thyristors sont côté phase de l'alimentation, correspondant plus généralement à un circuit à cathodes communes. On reproduit alors une structure d'une diode et d'un condensateur, mais depuis le condensateur C2. Ce condensateur C2 charge alors, par la diode supplémentaire, le condensateur supplémentaire dont une électrode est reliée à la borne E. L'énergie vient toujours du condensateur C1, mais en transitant par le condensateur C2. Les modifications à apporter se déduisent de l'exposé fonctionnel décrit en relation avec les figures précédentes.

Bien entendu, la présente invention est susceptible de diverses variantes et modifications qui apparaîtront à l'homme de l'art. En particulier, les dimensions données aux différents condensateurs et notamment au(x) condensateur(s) basse tension propre(s) à l'invention dépendent de l'application et des consommations attendues des circuits de commande. En outre, bien que l'invention ait été décrite en relation avec l'exploitation d'un condensateur (C1) d'alimentation du circuit de commande de l'interrupteur de découpage d'un convertisseur de puissance, celle-ci s'applique plus généralement dès que l'on peut disposer d'une source de tension basse en aval du pont redresseur et que l'on souhaite commander, avec un isolement ou des références de tension différentes, un interrupteur dans le pont ou en amont de celui-ci. Enfin, on pourra inverser l'ensemble de la structure en connectant le condensateur C1 sur les cathodes communes des éléments de redressement (diodes D1 et D2) et obtenir ainsi une alimentation négative aux bornes du condensateur C2. Les adaptations du circuit pour un tel fonctionnement sont à la portée de l'homme du métier.

## Revendications

1. Circuit isolé d'alimentation basse tension d'un circuit de commande (1) d'une charge (2) haute tension, dans ou en amont d'un pont redresseur (3, 13) ; comprenant
un premier condensateur (C1) basse tension fournissant une basse tension, une première électrode dudit condensateur (1) est connectée à une des bornes de sortie redressée du pont (M) ; et
au moins un deuxième condensateur (C2, C2') fournissant ladite basse tension audit circuit de commande (1), une première électrode du deuxième condensateur étant reliée à une des bornes d'entrée alternative (N) du pont,
**caractérisé en ce que** les deuxièmes électrodes respectives des condesateurs (C₁, C₂) étant reliées par une diode haute tension (Dr) dont la cathode est reliée au deuxième condensateur.

2. Circuit selon la revendication 1, **caractérisé en ce que** la charge du deuxième condensateur (C2, C2') intervient pendant une période de conduction du pont (2, 13) où celui de ses éléments de redressement (D4, Th4) qui relie les premières électrodes respectives des condensateurs (C1, C2) conduit, cet élément reliant les électrodes de potentiel le plus négatif.

3. Circuit selon la revendication 1 ou 2, **caractérisé en ce que** le premier condensateur (C1) est un condensateur d'alimentation basse tension d'un circuit en aval du pont (3, 13) .

4. Circuit selon l'une quelconque des revendications 1 à 3, **caractérisé en ce qu'**il comporte une deuxième diode haute tension (Di) dont l'anode est reliée, par l'intermédiaire d'un interrupteur de commande logique (B), à la deuxième électrode du premier condensateur (C1), et dont la cathode est reliée à une borne d'entrée logique du circuit de commande (1) en amont du pont (3).

5. Circuit selon l'une quelconque des revendications 1 à 3, **caractérisé en ce que** le pont de redressement (3, 13) est un pont double alternance ou triphasé.

6. Circuit selon l'une quelconque des revendications 1 à 5, **caractérisé en ce que** le pont (13) est un pont mixte ou commandé.

7. Circuit selon la revendication 6, **caractérisé en ce que** ladite charge est constituée par au moins un des éléments de redressement (Th3, Th4) du pont (13).

8. Circuit selon l'une quelconque des revendications 1 à 7, **caractérisé en ce que** le premier condensateur (C1) est chargé par un enroulement auxiliaire d'un transformateur d'une alimentation à découpage en aval du pont (3, 13).

## Claims

1. An isolated low-voltage supply source for a control circuit (1) of a high-voltage load (2), in or upstream of a rectifying bridge (3, 13), **characterized in that** it comprises:
a first low-voltage capacitor (C1) providing a low voltage, a first electrode of said capacitor (1) being connected to one of the rectified output terminals of the bridge (M); and
at least one second capacitor (C2, C2') providing said low voltage to said control circuit, a first electrode of the second capacitor being connected to one of the A.C. input terminals (N) of the bridge, the respective second electrodes of the capacitors (C1, C2) being connected by a high-voltage diode (Dr) having its cathode connected to the second capacitor.

2. The circuit of claim 1, **characterized in that** the charge of the second capacitor (C2, C2') occurs during a conduction period of the bridge (2, 13) when that of its rectifying elements (D4, Th4) which connects the respective first electrodes of the capacitors (C1, C2) conducts, this element connecting the electrodes having the most negative potential.

3. The circuit of claim 1 or 2, **characterized in that** the first capacitor (C1) is a capacitor of low-voltage supply of a circuit downstream of the bridge (3, 13).

4. The circuit of any of claims 1 to 3, **characterized in that** it comprises a second high-voltage diode (Di) having its anode connected, via a logic control switch (B), to the second electrode of the first capacitor (C1), and having its cathode connected to a logic input terminal of the control circuit (1) upstream of the bridge (3).

5. The circuit of any of claims 1 to 3, **characterized in that** the rectifying bridge (3, 13) is a fullwave or three-phase bridge.

6. The circuit of any of claims 1 to 5, **characterized in that** the bridge (13) is a composite or controlled bridge.

7. The circuit of claim 6, **characterized in that** said load is formed of at least one of the rectifying elements (Th3, Th4) of the bridge (13).

8. The circuit of any of claims 1 to 7, **characterized in that** the first capacitor (C1) is charged by an auxiliary winding of a transformer of a switched-mode power supply downstream of the bridge (3, 13).

## Patentansprüche

1. Eine isolierte Niederspannungsversorgungsquelle für eine Steuerschaltung (1) mit einer Hochspannungslast (2) in oder stromaufwärts bzw. vorgeschaltet gegenüber einer Gleichrichterbrücke (3, 13), **dadurch gekennzeichnet, dass** Folgendes vorgesehen ist:
ein erster Niederspannungskondensator (C1), der eine Niederspannung liefert, wobei eine erste Elektrode des Kondensators (1) mit einem der Ausgangsschlüsse der Gleichrichterbrücke (M) verbunden ist; und
mindestens ein zweiter Kondensator (C2, C2'), der die erwähnte Niederspannung an die Steuerschaltung liefert, wobei eine erste Elektrode des zweiten Kondensators mit einem der Wechselstromeingangsanschlüsse (N) der Brücke verbunden ist, und wobei die entsprechenden zweiten Elektroden der Kondensatoren (C1, C2) durch eine Hochspannungsdiode (Dr) verbunden sind, die mit ihrer Kathode mit dem zweiten Kondensator verbunden ist.

2. Schaltung nach Anspruch 1, **dadurch gekennzeichnet, dass** die Ladung des zweiten Kondensators (C2, C2') während einer Leitungsperiode der Brücke (2, 13) erfolgt, wenn dasjenige der Gleichrichterelemente (D4, Th4) der Brücke, welches die entsprechenden ersten Elektroden der Kondensatoren (C1, C2) verbindet, leitet, wobei dieses Element die Elektroden mit dem negativsten Potential verbindet.

3. Schaltung nach Anspruch 1 oder 2, **dadurch gekennzeichnet, dass** der erste Kondensator (C1) ein Kondensator für Niederspannungsversorgung einer Schaltung stromabwärts bzw. nachgeschaltet der Brücke (3, 13) ist.

4. Schaltung nach einem der Ansprüche 1 bis 3, **gekennzeichnet durch** eine zweite Hochspannungsdiode (Di), die mit ihrer Anode über einen Logik-Steuerschalter (B) mit der zweiten Elektrode des ersten Kondensators (C1) verbunden ist und die mit ihrer Kathode mit einem logischen Eingangsanschluss der Steuerschaltung (1) stromaufwärts gegenüber der Brücke (3) verbunden ist.

5. Schaltung nach einem der Ansprüche 1 bis 3, **dadurch gekennzeichnet, dass** die Gleichrichterbrücke (3, 13) eine Vollwellen- oder Dreiphasenbrücke ist.

6. Schaltung nach einem der Ansprüche 1 bis 5, **dadurch gekennzeichnet, dass** die Brücke (13) eine Verbundbrücke (eine zwei Dioden und zwei gesteuerte Gleichrichterelemente aufweisende Brücke) oder eine steuerbare Brücke ist.

7. Schaltung nach Anspruch 6, **dadurch gekennzeichnet, dass** die Last durch mindestens eines der Gleichrichterelemente (Th3, Th4) der Brücke (13) gebildet ist.

8. Schaltung nach einem der Ansprüche 1 bis 7, **dadurch gekennzeichnet, dass** der erste Kondensator (C1) durch eine Hilfswicklung eines Transformators geladen wird, und zwar eines Transformators mit Schaltnetzteil nachgeschaltet gegenüber der Brücke (3, 13).
